# EUROPEAN PATENT SPECIFICATION

(11) **EP 0 789 263 B1**
(45) Date of publication and mention of the grant of the patent: **09.10.2002**
(21) Application number: 97105646.0
(22) Date of filing: 15.07.1993
(51) Int. Cl.: G03B 17/30

(54) **Cassette with a photographic film**
Kassette mit fotografischem Film
Cassette avec film photographique

(30) Priority: 15.07.1992 JP 21213592
(43) Date of publication of application: 13.08.1997
(62) Divisional of application: 93111391.4
(73) Proprietor: FUJI PHOTO FILM CO., LTD., Kanagawa-ken (JP)
(72) Inventor: Takahashi, Koichi, Minami-Ashigara-shi, Kanagawa (JP); Takatori, Tetsuya, Minami-Ashigara-shi, Kanagawa (JP); Ichikawa, Haruo, Minami-Ashigara-shi, Kanagawa (JP); Kaya, Akimasa, Minami-Ashigara-shi, Kanagawa (JP); Takahashi, Tomoyuki, Minami-Ashigara-shi, Kanagawa (JP)
(74) Representative: Grünecker, Kinkeldey, Stockmair & Schwanhäusser Anwaltssozietät

(56) References cited:
- EP-A- 0 442 501
- US-A- 3 261 237
- US-A- 3 377 935
- US-A- 3 910 516
- US-A- 4 506 843

## Description

The present invention relates to a cassette with a photographic film, said cassette including: a spool provided with a retaining structure for retaining a trailer of said photographic film; and a cassette shell provided with a spool chamber for containing said spool rotatably and a photographic film passage port for communicating said spool chamber to an outside, whereas said retaining structure engages at least one hole of said trailer.

Such a cassette is for example known from US-A-4,506,843. However, due to the flat, rising shape of two hooks, which form a retaining structure, and to the shape of a holding down device, which extends in funnel shape thereto, the end or trailer of the film is curved elastically over the hooks, under the holding down device, and the oblong holes thereof jump onto the hooks, after which the film immediately returns into a flat position. Unthreading is therefore now no longer possible.

Moreover, photographic film of the 135 type, contained in a cassette, is marketed in the most prevalent range among other photographic films. The 135 photographic film cassette has a cassette shell constituted of a cylindrical body and two caps, the former formed of a thin metal plate and the latter fitted on the former. The cassette has a spool on which photographic film is wound in a form of a roll and which is contained in the cassette shell. To assemble this photographic film cassette, there are known several methods: U.S.P. 4,614,019 (corresponding to Japanese Patent Publication No. 2-691) discloses a process of winding the photographic film on the spool, and then assembling the cassette while covering the photographic film within the cassette shell by operation in a darkroom; U.S.P. 4,080,711 (corresponding to Japanese Patent Publication No. 60-48748) discloses a process of bringing the assembled cassette shell into the darkroom, disassembling the cassette shell for insertion of the photographic film, inserting the photographic film wound on the spool, and then assembling finally the cassette shell.

U.S.P. 3,910,516 (corresponding to Japanese Patent Laid-open Publication No. 49-107732) and Japanese Patent Laid-open Publication No. 52-77723 also suggest a photographic film cassette producing method constituted of producing an empty cassette incorporated with a spool in an illuminated room, inserting a tongue-like guide plate into a photographic film passage port formed in the cassette, then inserting a trailer of photographic film into the cassette while guided along the guide plate, retaining the trailer on the spool fixedly, rotating the spool so as to wind the photographic film up into the cassette.

It is also suggested by U.S.P. 4,834,306 and 4,846,418 and European Publication EP-A2 0 406 815 (corresponding to Japanese Patent Laid-open Publication No. 3-37645) to construct a photographic film cassette in which a cassette shell is constituted of parts formed from resin, and rotation of a spool exits a leader of the photographic film to the outside of the cassette. Such a leader-advancing cassette is different from photographic film cassettes conventionally in use, has the leader of the photographic film as fully contained within the cassette both before exposure and after exposure, and thus has advantages in that the photographic film is reliably protected from accidental exposure to ambient light, and no external protrusion of the leader facilitates the manual treatment of the cassette.

To construct the leader-advancing cassette, it is suggested in general to provide the cassette with such parts as have not been incorporated in conventional cassettes. For example, the cassette shell incorporates a light-shielding shutter member arranged openably in the photographic film passage port for projecting the inside from ambient light, or a visual indicator member arranged to appear externally for indicating the condition of the photographic film either unexposed or exposed, otherwise structures as known from U.S.P. 4,834,306 (corresponding to Japanese Patent Laid-open Publication No. 1-306845) and U.S.P. 5,049,912. However, production of such a leader-advancing cassette is involved in many problems due to increase in the number of the parts. Efficiency in manufacture could not be improved, particularly in the assembling operation requiring the light-shielded condition in the darkroom. Operation in the darkroom must be automated, to have additional problems in operability in view of inspection, maintenance, and taking steps to cope with accidents during the operation.

There are problems if a leader-advancing cassette is produced by following the method of U.S.P. 3,910,516 and Japanese Patent Laid-open Publication No. 52-77723. Although the guide plate is first inserted for inserting the trailer into the cassette, there would be strong possibility that the trailer in the course of insertion would be flexed or bent before reaching the spool. After assemblage of the cassette shell in the illuminated room, it is brought in a process of using the guide plate, which guides the insertion of the trailer only in the outermost position of the passage port. All with such guidance of the trailer, possibility of failure in retention of the trailer remains.

After effecting exposure on the photographic film, the exposed photographic film as contained in the cassette is removed from the cassette for a developing process. Although the photographic film is drawn out of the cassette, the photographic film cannot be separated from the spool because the trailer of the photographic film is fixedly retained on the spool. To remove the photographic film from the cassette, it is conventional to cut off the photographic film while leaving a portion of the trailer within the cassette.

Recycling of parts of photographic film cassettes is nowadays conceived, and includes two ways: reusing parts as withdrawn after the first use; and remolding new resinous parts by melting the used resinous parts. It is, however, difficult to reuse such a used cassette, because the trailing portion of the photographic film is attached irremovably on the spool. To remold a resinous cassette from that cut off from the photographic film degrades the quality of the resin to be molded, with the small portion of the photographic film mixed. Therefore the cassette after separation of the photographic film requires such steps as disassembling the cassette shell, and removing the small portion of the photographic film from the spool. There remains a problem in posterior treatment of photographic film cassettes after exposure of photographic film.

In view of the foregoing problems, the object of the present invention is to provide a cassette with a photographic film as indicated above improved in view of facility in loading photographic film into the cassette and removing photographic film from the cassette.

According to the present invention, which is defined in claim 1, this objective is solved by a cassette with a photographic film as indicated above by a spool body provided with a recess in a core of said spool extending in longitudinal direction, whereas said retaining structure is an inserting claw formed on said recess in said spool body in correspondence with said hole in said trailer; a clamper member fittable into said recess in said spool body in order to clamp said trailer with said spool body by connection to said spool body, whereas said clamper member being connected via a foldable connecting hinge portion to said spool core for connecting said clamper member to said spool body foldably.

The novel cassette includes at least one retaining hole formed in the trailer. A slot is formed in the spool and extended in an axial direction of the spool for inserting the trailer. At least one retaining claw is formed to project from inside the slot so as to be fitted on the retaining hole, thereby retaining the trailer on the spool. At least one preventive projection is formed to project from inside the slot in a direction opposite to the retaining claw, for preventing the retaining hole from slipping away from the retaining claw.

A center of the slot is unintersected with a rotational axis of the spool. The novel cassette makes it easy to load photographic film into the cassette and remove photographic film from the cassette.

Other preferred embodiments of the present invention are laid down in further dependent claims.

In the following, the present invention is explained in greater detail with respect to several embodiments thereof in conjunction with the accompanying drawings, wherein:
Fig. 1 is an exploded perspective view illustrating a cassette not according to the present invention;
Fig. 2 is a cross section illustrating a spool incorporated in the cassette in Fig. 1;
Fig. 3 is a front elevation illustrating the spool in Fig 2;
Fig. 4 is an explanatory view illustrating a shape of a trailer of the photographic film as contained in the cassette in Fig. 1;
Fig. 5 is a perspective view illustrating an apparatus for loading the photographic film;
Fig. 6 is a plan view illustrating the loading apparatus in Fig. 5;
Fig. 7 is a side elevation, partly cut away, illustrating the apparatus in Fig. 5;
Fig. 8 is an explanatory view illustrating operation of the apparatus in Fig. 5;
Figs. 9 to 11 are explanatory views illustrating operation in the course of inserting and retaining the trailer on the spool of Fig. 1;
Fig. 12 is an explanatory view illustrating the trailer standing retained on the spool of Fig. 1;
Figs. 13 and 14 are explanatory views illustrating operation after retaining the trailer on the spool of Fig. 1;
Fig. 15 is an explanatory view illustrating another preferred shape of a trailer not according to the present invention;
Fig. 16 is an explanatory view illustrating an inserter jig preferable for photographic film having the trailer in Fig. 15;
Fig. 17 is a perspective view illustrating preferred novel spool according to the present invention;
Fig. 18 is a cross section illustrating a cassette incorporating the spool in Fig. 17;
Fig. 19 is an explanatory view illustrating a standby position of the trailer to be retained on a spool;
Fig. 20 is an explanatory view illustrating an inserting position of an inserter member, as moved from the standby position in Fig. 19 and inserted into the cassette;
Fig. 21 is an explanatory view illustrating the inserter member standing moved from the inserting position and exited from the cassette;
Fig. 22 is an explanatory view illustrating the course of winding the photographic film around the spool;
Fig. 23 is a perspective view illustrating still another preferred novel spool not according to the present invention;
Figs. 24 and 25 are explanatory views illustrating each retaining claw in the course of deformation of the spool according to Fig. 23;
Figs. 26 and 27 are explanatory view illustrating variant spools relevant to the spool in Fig. 23;
Fig. 28 is an explanatory view illustrating another preferred novel apparatus for loading photographic film not according to the present invention;
Fig. 29 is a cross section illustrating a novel apparatus for removing photographic film being not a part of the present invention;
Fig. 30 is a perspective view illustrating a separator jig for use in the apparatus in Fig. 29;
Figs. 31 to 33 are perspective views illustrating other preferred separator jigs not according to the present invention;
Figs. 34 to 36 are explanatory views illustrating operation of the apparatus in Fig. 29;
Fig. 37 is a front elevation illustrating a spool not according to the present invention in the course of separation of the trailer;
Fig. 38 is a cross section illustrating the spool not according to the present invention in the course of separation of the trailer;
Fig. 39 is an exploded perspective view illustrating another novel cassette not according to the present invention in which a slot for receiving a trailer in the spool is off-center;
Fig. 40 is a cross section illustrating the spool in Fig. 39;
Fig. 41 is an explanatory view illustrating a construction for retaining the trailer on the spool in the cassette in Fig. 39;
Fig. 42 is an explanatory view illustrating the trailer in the course of retention on the spool in the cassette in Fig. 39;
Fig. 43 is an explanatory view illustrating a trailer in the course of separation from the spool in the cassette in Fig. 39; and
Fig. 44 is a cross section illustrating another preferred cassette not according to the present invention in which a core of a spool has a greater diameter.

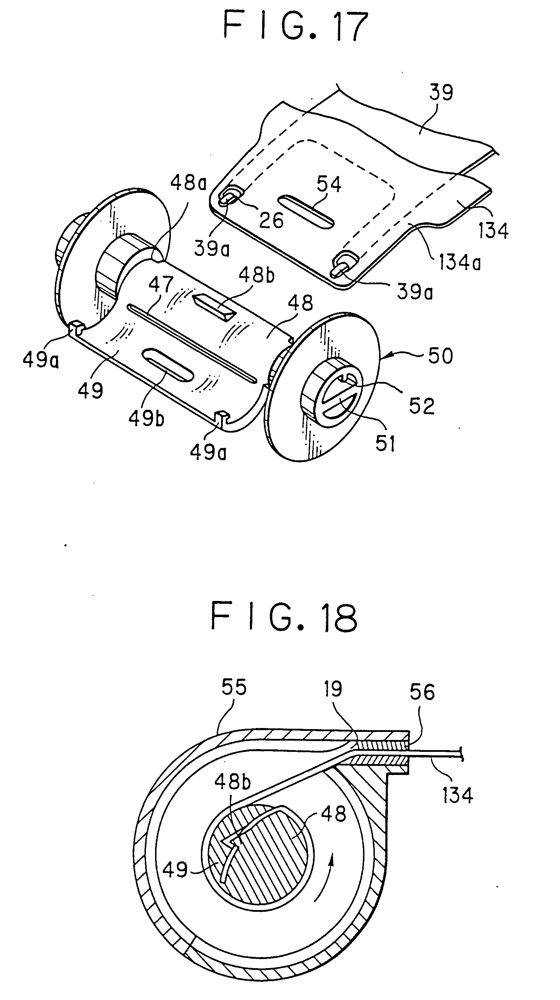

The present invention will be explained together with an apparatus and method of loading and removing photographic film in association with a cassette according to the present invention which is shown in Figs. 17 to 22. The remaining Figures will be described for clarity reasons.

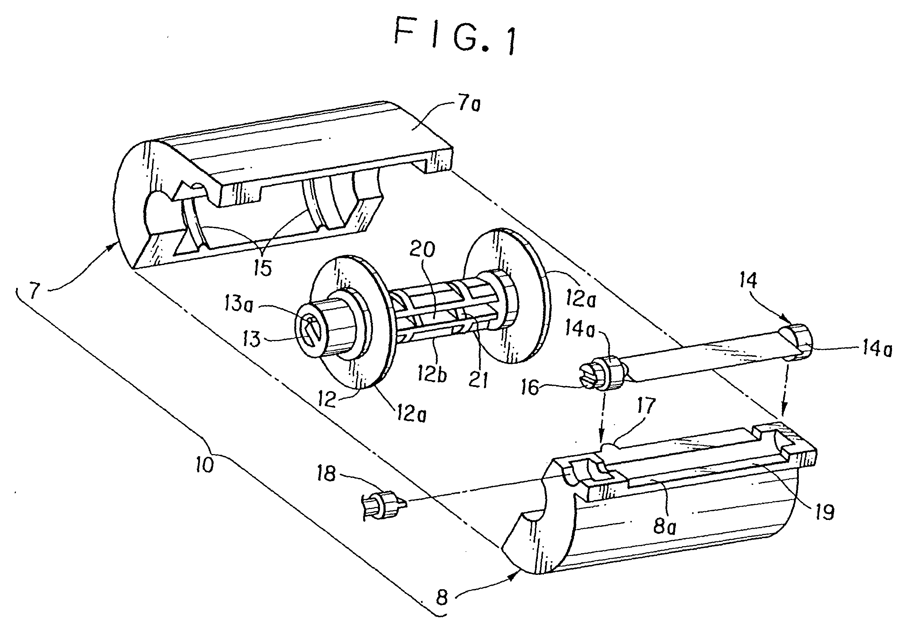

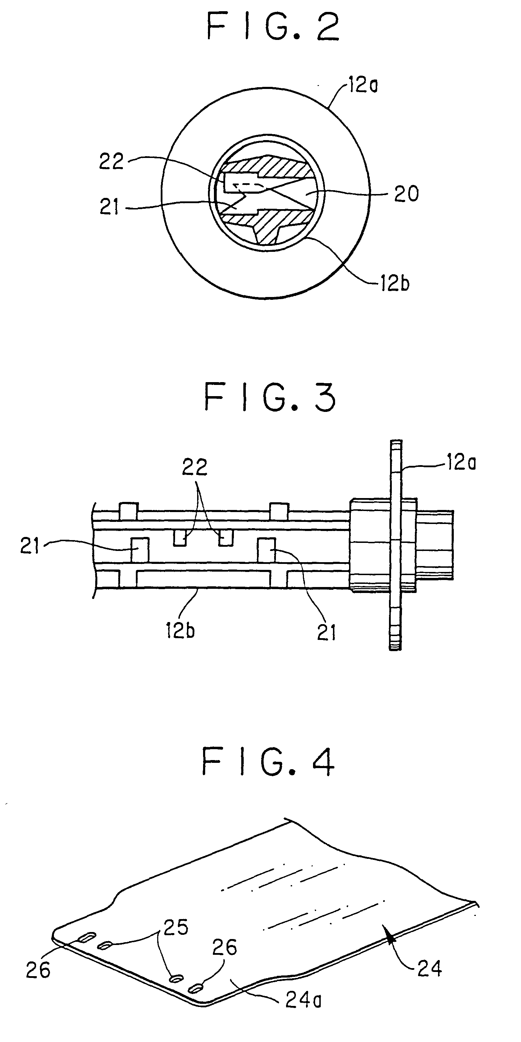

In Figs. 1 to 3 illustrating a novel photographic film cassette, having a spool 12 and a cassette shell 10 constituted of a pair of shell halves 7 and 8 molded from resin. Pairs of ridges 15 are formed on the inside of the shell halves 7 and 8. When photographic film 24 (see Fig. 4) is wound around the spool 12 and contained within a spool chamber between the shell halves 7 and 8, the ridges 15 are in contact with the outermost turn of the photographic film 24 so as to prevent the roll of the photographic film 24 from loosening. When the spool 12 is rotated in the direction to unwind the film 24 namely clockwise in Fig. 1, the roll of the photographic film is rotated clockwise together. Reference numeral 17 designates a separator claw. During rotation of the roll of the photographic film 24, a leading end of the photographic film abuts on the separator claw 17, which separates the leading end from the roll of the film.

Port walls 7a and 8a are formed on the shell halves 7 and 8. With the shell halves 7 and 8 joined together, the port walls 7a and 8a defines a photographic film passage port 19. A shutter plate 14 is supported by the port walls 7a and 8a. Both ends of the shutter 14 are provided with rotary shaft portions 14a to be borne between the port walls 7a and 8a, so that the shutter 14 is rotatable on an axis parallel to the spool 12. An end of one of the shaft portions 14a has a key 16, which appears externally through a face of the cassette shell 10. When an opener member 18 is fitted on the key 16 and rotates the key 16, the shutter 14 is rotated in the range between positions of blocking and opening the passage port 16.

On the spool 12 are formed a pair of flanges 12a. The photographic film is wound on a core 12b of the spool 12 between the flanges 12a. Both ends of the spool 12 appear externally through faces of the cassette shell 10, and are provided with keys 13. As known per se, the keys 13 are used for engagement with a drive member for rotating the spool 12. In one of the keys 13 is formed a notch 13a.

A slot 20 is formed in the core 12b. Inside the slot 20 are arranged two retaining claws 21 and two slip-preventive ridges 22. The ridges 22 are formed in the direction opposite to, and at the interval narrower than, the retaining claws 21. The right side of the slot 20 is adapted to receive insertion of a trailer 24a of the photographic film 24 as illustrated in Fig. 4.

The trailer 24a of the photographic film 24 is provided with two retaining holes 25, which are engaged with the retaining claws 21. The ridges 22 press the trailer 24a in the direction opposite to projecting of the retaining claws 21, so that the holes 25 are prevented from disengagement from the retaining claws 21, even if a force for pulling the photographic film 24 from the slot 20 should be applied to the trailer 24a. The trailer 24a is further provided with two pick-up holes 26 at the interval wider than the retaining holes 25. The pick-up holes 26 are used in operation of inserting the trailer 24a into the slot 20.

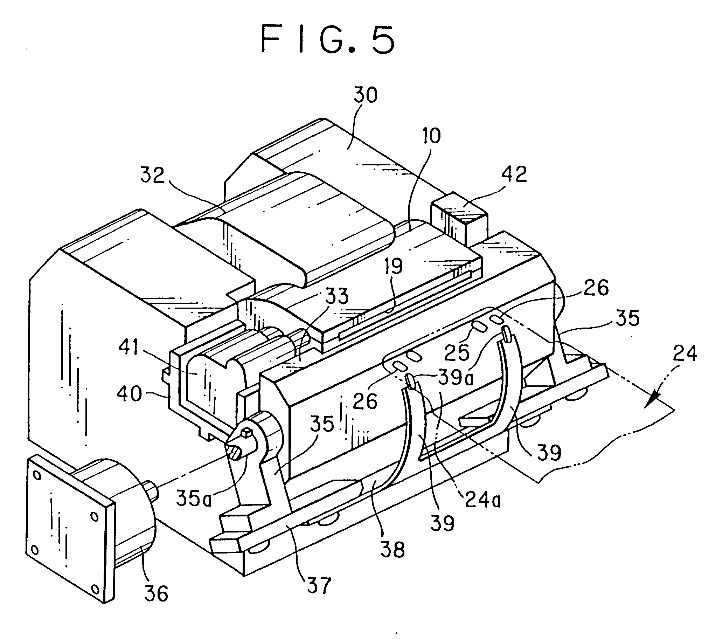

Figs. 5 to 7 illustrate a novel apparatus for inserting photographic film into the cassette. The apparatus is adapted to fixing the photographic film 24 on to the spool 12 and winding it thereabout, after assembling the spool 12 and the shutter 14 into the cassette shell 10 consisting of the shell halves 7 and 8. A base 30 is provided with a holder 31 shaped in correspondence with the outline of the cassette shell 10 for receiving and supporting the cassette shell 10. On the base 30 is journaled a lever 32, which is driven by a hydraulic cylinder device (not shown) through a linkage mechanism (not shown). When the cassette shell 10 is supplied into the holder 31, the lever 32 presses and holds the cassette shell 10 to be immovable.

With the cassette shell 10 pressed by the lever 32, the cassette shell 10 is fixedly oriented by positioning of the port wall 8a on a positioning edge 33, so as to direct the passage port 19 as predetermined. Both lateral faces of the base 30 are provided with a pair of arms 35 journaled thereon with each shaft 35a. The arms 35 are driven by a stepping motor 36. Each arm 35 is connected with a connecting plate 37, which is used for fixing a clawed inserter jig 39 on the arms 35. The inserter jig 39 is arcuate, is formed of flexible thin metal, and is provided with two projections tipped with pick-up claws 39a.

A slide frame 40 is arranged on one lateral face of the base 30 to be slidable toward, and apart from, an end face of the cassette shell 10, and is adapted to support a drive unit 41. The drive unit 41 drives the spool 12 and the shutter 14 to rotate, and is constituted of a fork 41a for engagement with the key 13 of the spool 12, a motor for driving the fork, an opener jig 18 for engagement with the key 16, and a motor for driving the opener 18. The slide frame 40 is in the retracted position before the cassette shell 10 is set in the holder 31, and is moved to the drive position after setting the cassette shell 10 in the predetermined orientation. The fork 41a for spool 12 and the opener 18 for the shutter 14 are respectively engaged with the keys 13 and 16 both appearing through the face of the cassette shell 10.

The other face of the base 30 is associated with a photo sensor 42, which detects the position of the notch 13a in the spool 12, so as to check the rotational position of the spool 12 with reference to the predetermined orientation for positioning the slot 20. Note that, though it is not shown, the spool end facing on the photo sensor 42 is provided with the key 13 and the notch 13a.

A feeder 45 of the photographic film 24 is arranged to face to the base 30. The feeder 45 is connected to a device for supplying the photographic film 24, and, each time one strip of photographic film is cut off and contained into the cassette shell, holds next trailer 24a in position for standby. When the trailer 24a is protruded from the feeder 45 on standby, the holes 26 are positioned as predetermined relative to the pick-up claws 39a.

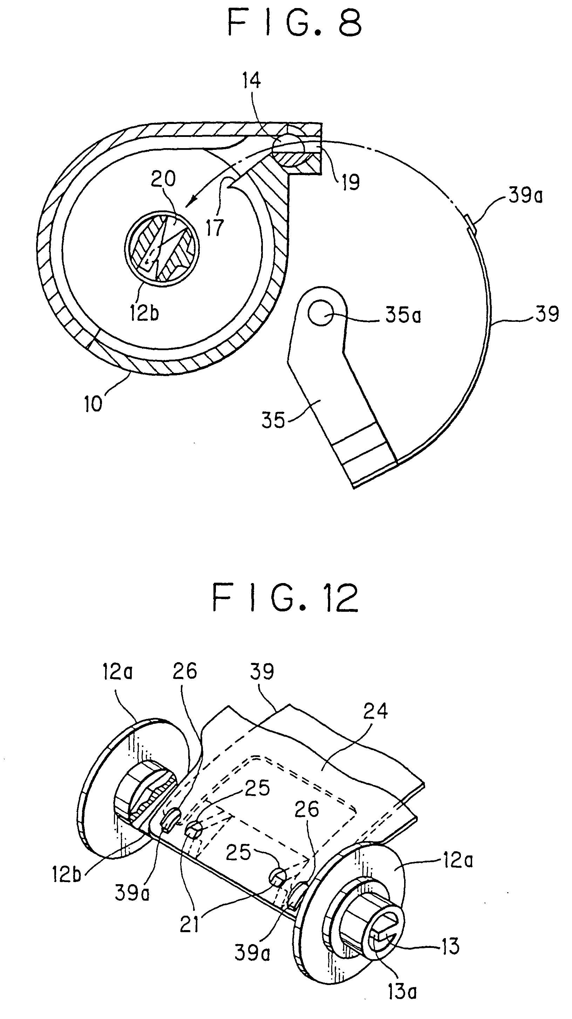

Fig. 8 illustrates relative positions of the cassette shell 10 and the arm 35 while the cassette shell is positioned by the holder 31 and the edge 33. The shaft 35a is substantially equally distant from the axis of the core 12a, the passage port 19, and the claw 39a. When the arm 35 is rotated counterclockwise from the standby position of Fig. 8, the claw 39a is passed through the passage port 19 and brought into the slot 20 within the core 12a. Note that the notch 13a is used for setting the rotational orientation of the spool 12 appropriately for receiving the trailer 24a, as illustrated in Fig. 8.

The operation of the inserting the photographic film 24 into the cassette shell 10 is described now. The cassette shell 10, as shown in Fig. 1, is assembled with the new spool 12 in an illuminated room, namely not in darkroom. The empty cassette therefore can be assembled reliably and easily, together with the shutter 14 and other separate parts, such as an indicator member for unexposed and exposed states, and a regulating member for rotation of the spool. The cassette shells 7 and 8 are welded together firmly by ultrasonic welding, and the empty cassette is brought to the following process.

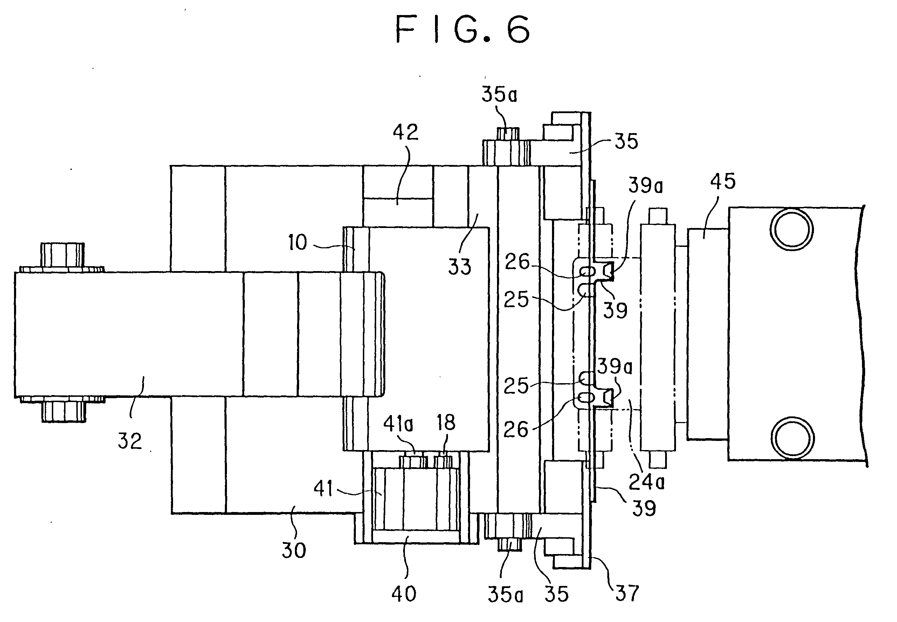

The empty cassette into which the spool 12 and the cassette shell 10 are assembled is brought into darkroom, and set into the photographic film loading apparatus. To set the empty cassette, the lever 32 is in the open position. The slide frame 40 is retracted. With the cassette shell 10 set in the holder 31, the lever 32 is swung to the pressing position so as to hold the cassette shell 10 on the holder 31 and the edge 33 in the predetermined orientation. The slide frame 40 is next moved until the drive position of Fig. 6. The fork 41a is engaged with the key 13. The opener 18 is engaged with the key 16.

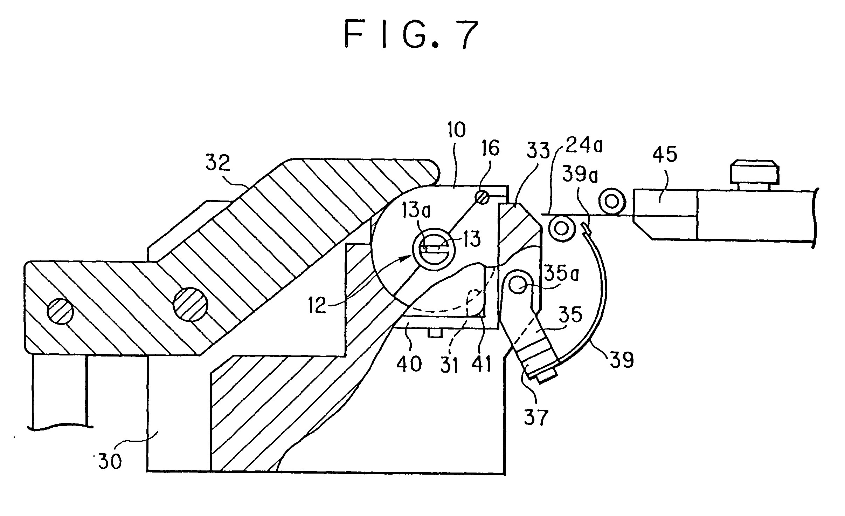

When the fork 41a and the opener 18 are firmly engaged with the respective keys 13 and 16, the drive unit 41 is actuated to drive the spool 12 in the winding direction, namely counterclockwise in Fig. 7. The spool 12 is thus rotated. The photo sensor 42 monitors the position of the notch 13a at the key 13 and, when the notch 13a has come to the predetermined position, sends a stop signal to the drive unit 41. The spool 12 is so stopped as to direct the entrance of the slot 20 in the core 12a to the passage port 19. Note that it is possible to regulate the spool 12 in the same rotational orientation beforehand during the transportation of the empty cassette into the holder 31. This can cause omission of the photo sensor 42 from the base 30.

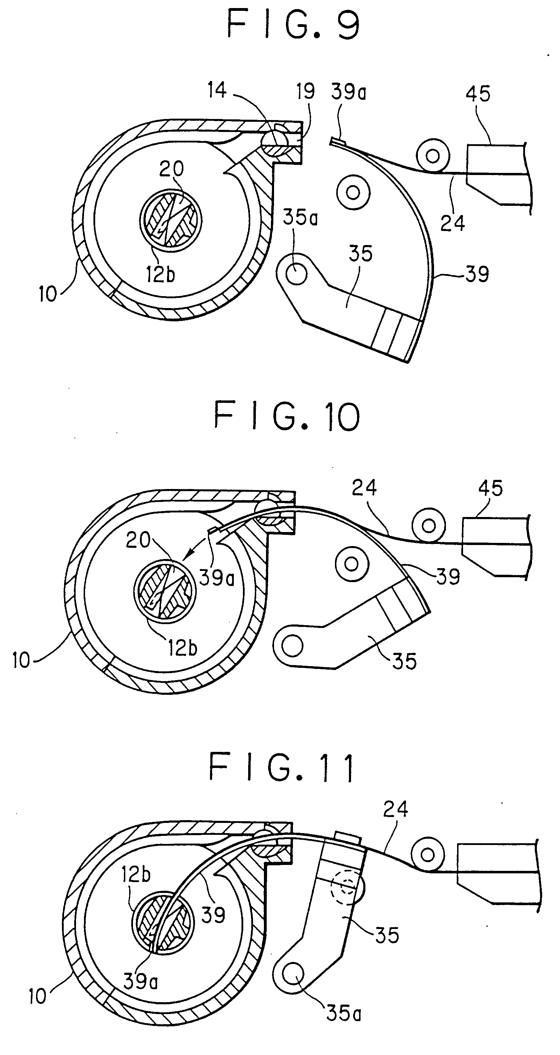

The opener 18 is driven by the drive unit 41 so as to rotate the shutter 14 to open the passage port 19. The stepping motor 36 is then energized to drive the arm 35 to make rotation of a predetermined angle. The inserter jig 39 rotates together with the arm 35, to engage the pick-up claws 39a with the holes 26 in the trailer 24a of the photographic film 24, as illustrated in Fig. 9. Further rotation of the arm 35 causes the pick-up claws 39a to pick up the trailer 24a, and pulls the photographic film 24 from the feeder 45.

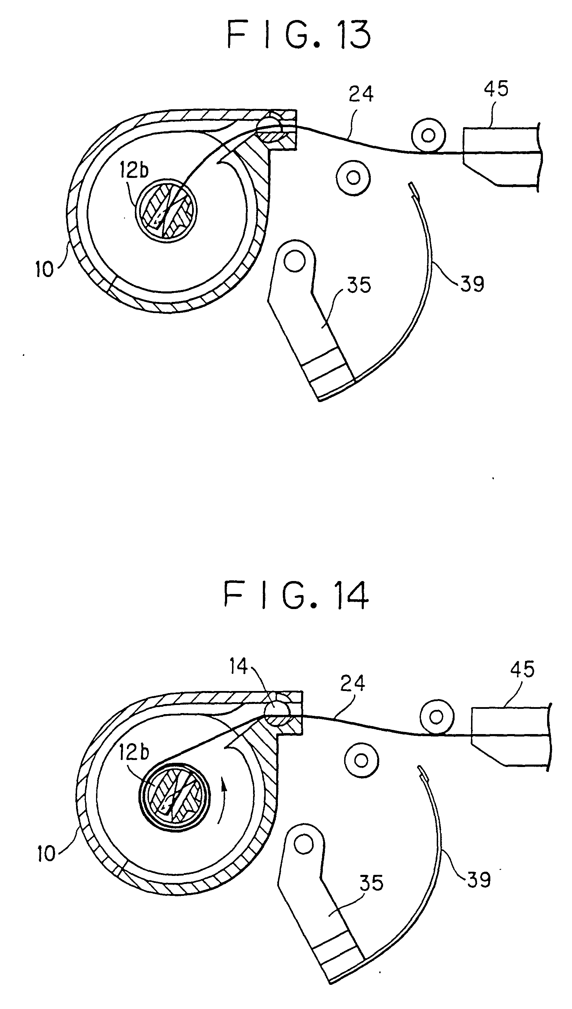

Rotation of the arm 35 causes the pick-up claws 39a to come through the passage port 19 with the trailer 24a picked up, and into the cassette shell 10. The arm 35 having come in the positions of Fig. 10 and then of Fig. 11, the pick-up claws 39a is inserted into the slot 20 formed in the core 12b. In the course of the insertion of the pick-up claws 39a into the slot 20, the trailer 24a as picked up by the pick-up claws 39a comes into the location between the retaining claws 21 and the ridges 22, so as to fit the retaining claws 21 into the holes 25, as illustrated in Fig. 12. The inserter jig 39 could be rubbed on the inside walls of the slot 20, but is so flexible that the pick-up claws 39a can be passed fully through the slot 20, without great resistance to insertion of the jig 39 into the slot 20. Note that the upper wall of the slot 20 is omitted from Fig. 12.

With the trailer 24a retained on the core 12b of the spool 12, the arm 35 rotates back to the standby position as illustrated in Fig. 13, while pulling the pick-up claws 39a out of the cassette shell 10. The retaining claws 21 are so shaped as to keep the photographic film 24 from moving in the direction toward the passage port 19. Once the holes 25 are retained on the retaining claws 21, never are the holes 25 disengaged from the slot 20 though the inserter jig 39 is pulled out of the slot 20. It is noted that, to remove the inserter jig 39 from the cassette, it is possible to rotate the spool 12 counterclockwise first, until the inserter jig 39 is pushed out of the slot 20. The arm 35, next, can be rotated clockwise to pull the inserter jig 39 out of the cassette shell 10. This alternative operation is possible due to the flexible thin characteristic of the inserter jig 39.

After the arm 35 is brought back to the standby position, the fork 41 of the drive unit 41 is driven to rotate the spool 12 in the counterclockwise direction as illustrated in Fig. 14. The photographic film 24 is wound up around the core 12b of the spool 12. The photographic film 24 is further drawn out of the feeder 45 by tension due to rotation of the spool 12, while being wound into the cassette shell 10. When a predetermined length of the photographic film 24 is passed through the feeder 45, the spool 12 is stopped from rotating. A cutter incorporated in the supply device of the photographic film is actuated to cut the photographic film 24. A leader-forming end of the photographic film 24 in the course of being wound is cut out by the cutter into the shape of the leader, at the same time as a trailer-forming end of next strip of photographic film is cut out by the cutter into the shape of the trailer, in which the holes 25 and 26 are further punched.

The strip of photographic film 24 being cut off, the spool 12 is driven to wind up the photographic film 24 into the cassette shell 10. Upon winding the leader of the photographic film 24 into the cassette shell 10, the spool 12 is stopped. The opener 18 is rotated clockwise, to move the shutter 14 to the blocking position to close the passage port 19. Then the inside of the cassette shell 10 is shielded completely from ambient light. The lever 32 is retracted to the releasing position. The cassette shell 10 with the photographic film 24 contained is removed from the holder 31, for which another empty cassette is supplied. The operation of the loading a cassette with photographic film is repeated similarly.

Accordingly photographic film cassettes can be manufactured with high efficiency despite a somewhat complicated structure of the empty cassette, because of the operation in the steps of: assembling the empty cassette in an illuminated room; retaining the trailer 24a on the spool 12 in the darkroom; and winding the photographic film 24 into the cassette in the darkroom.

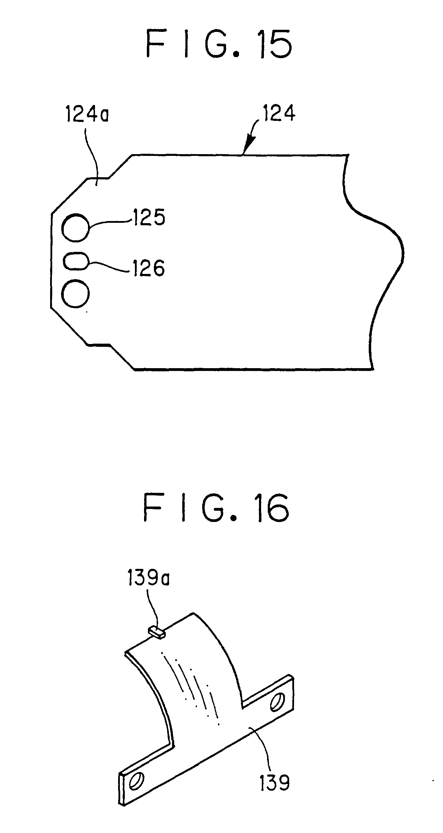

Note that a novel inserter jig can have not only the two claws 39a, but one or three or more claws, for picking up the trailer 24a. Figs. 15 and 16 illustrate photographic film 124 having a trailer 124a, in which a single pick-up hole 126 is formed, with two retaining holes 125. For use with this, an inserter jig 139 is provided with a single pick-up claw 139a. If another number of claws are formed on an inserter jig, pick-up claws of the equal number can be formed in a trailer of photographic film.

A trailer of photographic film can also provided with a long single pick-up hole for being picked up by a plurality of pick-up claws formed on a spool. Such pick-up claws can be effective if they are so shaped as to move together with the trailer toward the spool without disengagement with the trailer, and as to be disengaged from the trailer to move alone toward the passage port in response to drawing back of the inserter jig or rotating of the spool in the winding direction.

Fig. 17 illustrates a preferred embodiment according to the present invention in which the spool is differently constructed. Elements similar to those in the above embodiment are designated with identical reference numerals. A spool body 48 is provided with a damper 49 via a foldably connecting hinge portion 47 of a small thickness, formed integrally. The spool body 48 is provided with a pair of notches 48a, with which hooks 49a on the damper 49 are engaged. A long hooking claw 48b is formed integrally with the spool body 48. The inner face of the damper 49 is provided with an hooking hole 49b, in which the hooking claw 48b is fitted when the damper 49 is fitted on the spool body 48. The end of a spool 50 is provided with a key 51 and a projection 52, which corresponds to the former notch 13a and is adapted to detection through the photo sensor so as to check the rotation-al orientation of the spool 50.

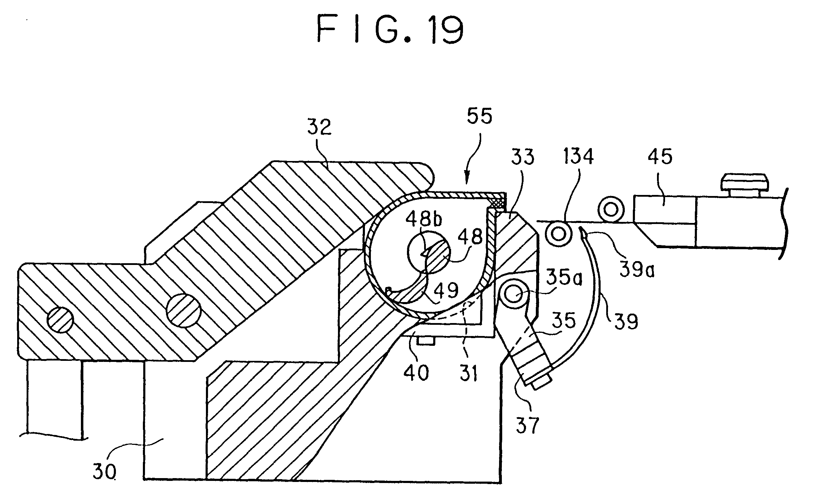

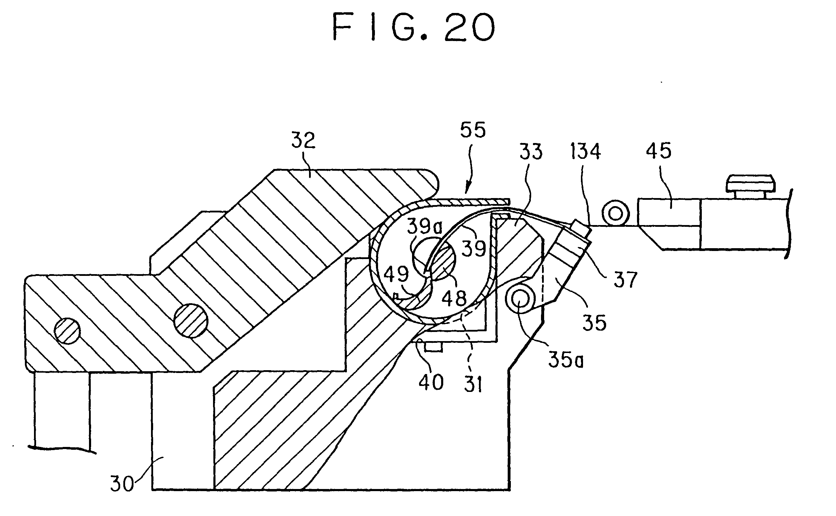

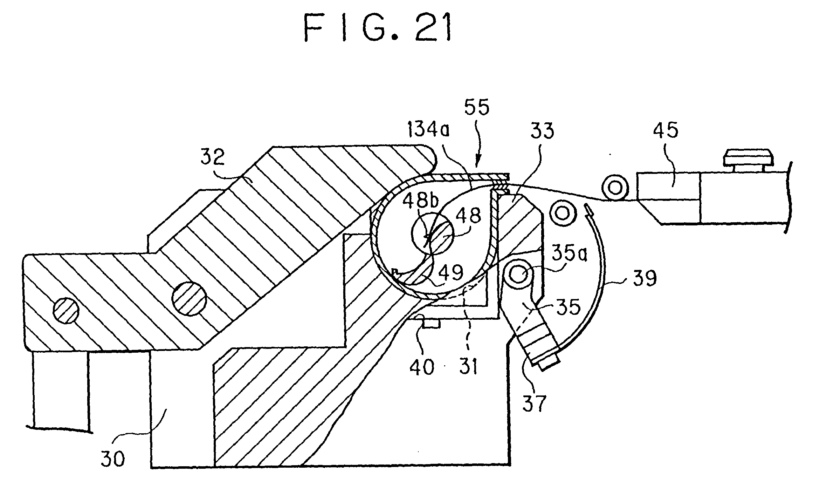

In correspondence with the spool 50, a trailer 134a of photographic film 134 is provided with the two holes 26 and a hooking hole 54. An empty cassette 55 for containing the photographic film 134 is set while the inserter jig 39 is in the standby position, as illustrated in Fig. 19. The loading apparatus is actuated. The trailer 134a is picked up by engagement of the pick-up holes 26 with the claws 39a. The inserter jig 39, as illustrated in Fig. 20, comes into the empty cassette 55, and reaches the spool body 48, until the hooking hole 54 is engaged with the claw 48b. Then the inserter jig 39 is pulled out of the cassette 55 as illustrated in Fig. 21, without disengagement between the hole 54 and the claw 48b. Note that, for reliable engagement of the hole 54 with the claw 48b, less than one counterclockwise rotation of the spool 50 is effective: while the claws 39a keep the trailer 134a close to the spool body 48, counterclockwise rotation of the claw 48b can easily cause the hole 54 to receive the claw 48b.

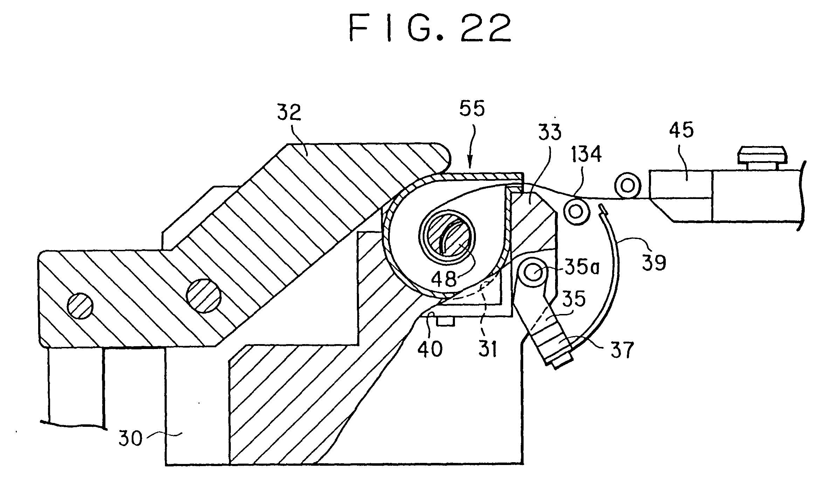

After the inserter jig 39 is drawn from out of the cassette shell 55, the spool 50 is rotated in the direction to wind the photographic film 134, the clamper 49 is pressed by the photographic film 134 against the spool body 48. As illustrated in Fig. 18, the clamper 49 is flexed with respect to the hinge portion 47. The claw 48b is fitted into the hole 49b. The clamper 49 is rotated together with the spool body 48. The photographic film 134 is wound on the spool 50 as illustrated in Fig. 22. Note that the cassette 55 in Fig. 18 lacks the shutter 14 but has plush or light-trapping fabric 56 well known in the art of photography.

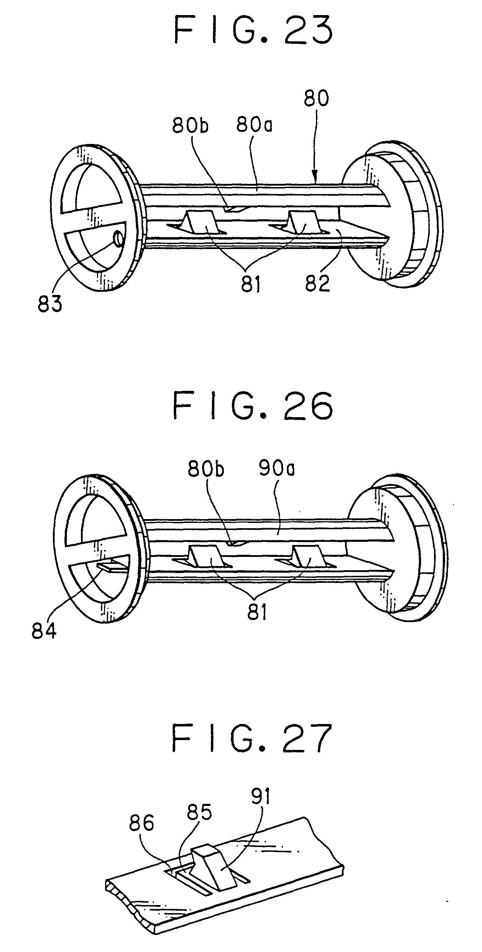

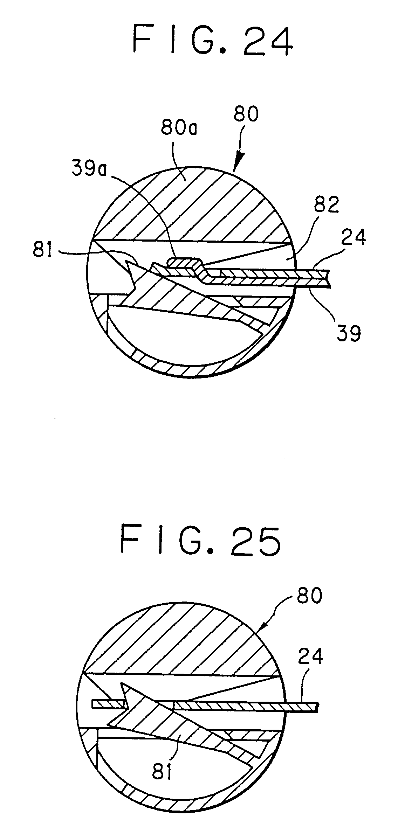

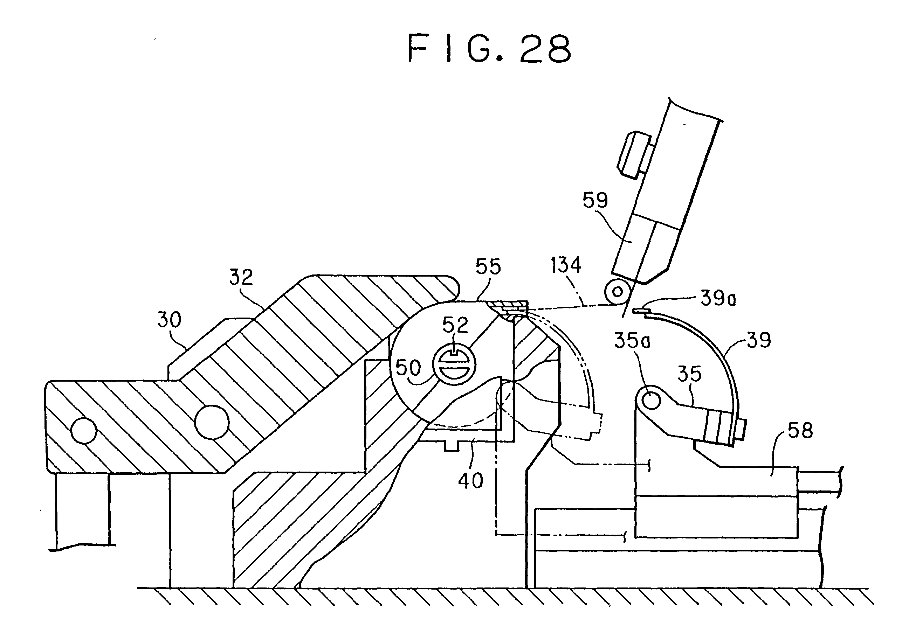

Fig. 23 illustrates another novel spool 80 not covered by the present invention, which is formed from resin, and has retaining claws 81 movable up and down because of resilience. Referenced by 80b are slip-preventive ridges. The retaining claws 81 of the spool 80 are deformed as illustrated in Figs. 24 and 25 when the inserter jig 39 with the trailer 24a is inserted into a slot 82 in a core 80a. This deformability facilitates the insertion. The resilience of the retaining claws 81 recovers their original form when the retaining holes 25 in the trailer 24a receive the retaining claws 81. The deformability is also helpful to retention. The rotational orientation of the spool 80 is successively pursued by photoelectric detection of a hole 83. Alternatively, a core 90a of the novel spool can have a projection 84 as illustrated in Fig. 26. The projection 84 can be detected by mechanical contact with the photographic film loading apparatus. It is further possible as illustrated in Fig. 27 to form each retaining claw 91 on a tongue 85 defined with a channel-shaped slit 86, so as to construct the claw 91 movable with the tongue 85.

Fig. 28 illustrates another embodiment not according to the present invention. The arm 35 swingable with the inserter jig 39 is journaled on a slidable unit 58. The photographic film 134 is fed downward from a feeder 59. The photographic film loading apparatus in Fig. 28 is used e.g. for the cassette 55 in Fig. 18. With the cassette 55 positioned, the projection 52 is detected photoelectrically, so as to stop the spool 50 in the rotational orientation as predetermined.

The slidable unit 58 is next moved by a hydraulic cylinder from the standby position indicated by the solid line as shown to the operating position indicated by the phantom line. The trailer 134a of the photographic film is fed by the feeder 59 and stands by for the sliding path of the pick-up claw 39a. The slidable unit 58 slides to slide horizontally the claws 39a, so as to fit the claws 39a into the pick-up holes 26. The inserter jig 39 moves horizontally toward the base 30, while drawing the photographic film 134. The slidable unit 58 is stopped in the position of insertion. The shaft 35a of the arm 35 is shifted to the position from which the center of the spool 50 and the passage port 19 are equally distant, namely to the position of the shaft 35a according to Fig. 8.

Operation follows in the manner similar to the former embodiment. With reference to the shaft 35a as rotational center, the arm 35 is swung at a predetermined angle, and swung back until the initial inserting position. The trailer 134a is mounted on the spool body 48 of the spool 50 by hooking the claw 48b on the hole 54. Then the inserter jig 39 is drawn out of the cassette 55. The slidable unit 58 is retracted to the standby position. The spool 50 is driven to rotate in the winding direction of the photographic film 134. The photographic film 134 is wound up into the cassette 55, while drawn out of the feeder 59.

This photographic film loading apparatus incorporating the slidable unit 58 is naturally applicable not only to the cassette 55 in Figs. 17 and 18 but also to the cassette 10 in Figs. 1 to 4. Note that, though the present loading apparatus differs from the former in movement of the inserter jig 39, the former in arcuate fashion and the latter in straight and then arcuate courses, yet the inserter jig 39 can be moved along other paths. For example, the inserter jig 39 can be moved, first in straight fashion to the passage port 19, secondly in arcuate fashion from the passage port 19 to the slot 20, and thirdly in straight fashion within the slot 20. Such a preferable path makes it possible to lessen damages on the photographic film 24 and the shutter 14 while retaining trailer 24a of the photographic film 24 on the spool 12.

Accordingly, the use of the novel loading apparatus can completely automate the processes of loading the cassette with the photographic film. The photographic film cassette can be produced with great efficiency, because the empty cassette with the spool can be manufactured in an illuminated room.

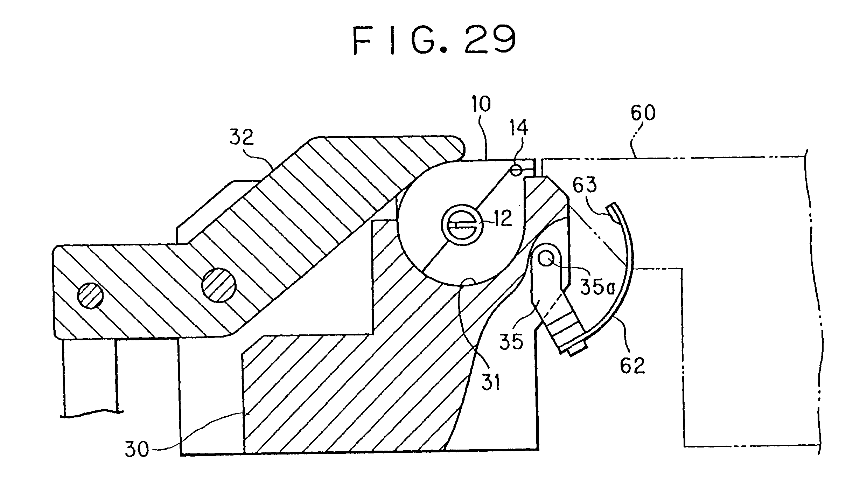

Fig. 29 illustrates an apparatus not being part of the invention for removing exposed photographic film 144. This apparatus is applied in a photo laboratory, and usable both in the darkroom and an illuminated room, with a coverage for shielding the inside from ambient light. Fundamental construction of the removing apparatus is similar to the loading apparatus in Fig. 7. Elements the same as those of the former apparatus is designated with identical reference numerals. In the removing apparatus is arranged a photographic film drawing device 60, which is connected to a developing apparatus. The drawing device 60 draws the exposed photographic film 144 exited from the cassette shell 10, so as to convey the photographic film 144 automatically to the developing apparatus.

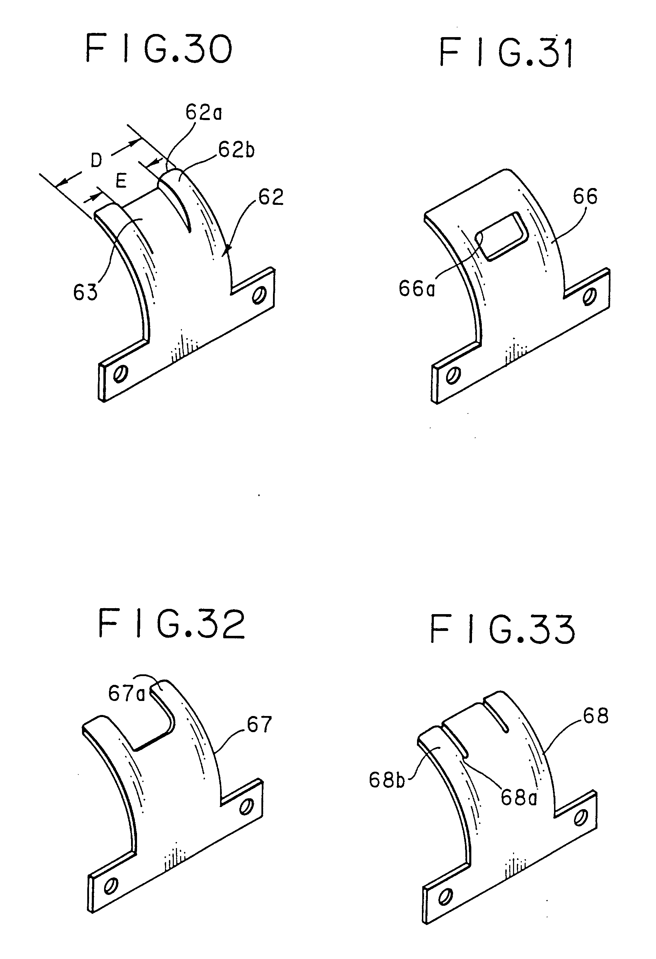

The two arms 35 are provided with a separator jig 62 attached thereto. The separator jig 62 is arcuate, is formed of flexible thin metal, and is provided with a central lowered portion 63 on a front edge 62a, as illustrated in Fig. 30. The front edge 62a is so shaped as corresponds to the spool 12 illustrated in Figs. 2 and 3. The general width D of the separator jig 62 is greater than the interval between the two retaining claws 21. The width E of the lowered portion 63 is greater than the interval between the preventive ridges 22.

With all the photographic film wound and contained within the cassette shell 10, the cassette shell 10 set on the holder 31. Then the opener 18 rotates the shutter 14 to open the passage port 19. The fork 41a drives the spool 12 in the direction of advancement of the photographic film 144. The roll of the exposed photographic film 144 is rotated together with the spool 12. The leading edge of the photographic film 144 abuts on, and is separated by, the separator claw 17, and is directed into the passage port 19. With the spool 12 driven, a leader of the photographic film 144 is exited from the cassette shell 10, and is guided into the drawing device 60.

The photographic film 144 is advanced into the drawing device 60 at a predetermined length. A drawing mechanism in the drawing device 60 is then actuated to draw the photographic film 144 from the cassette shell 10. The drive unit 41 no further drives the fork 41a. The photographic film 144 is advanced into the drawing device 60 by being drawn. Nearly all the exposed photographic film 144 is drawn out of the cassette shell 10. As a trailer 144a of the photographic film 144 stands retained on the core 12b of the spool 12, the photographic film 144 stops being drawn out. The drawing device 60 incorporates a tension meter, which checks the tension of the photographic film 144 and detects the state where nearly all the exposed photographic film is drawn out. Upon this detection, the drawing device 60 is moved slidingly to the right in Fig. 29 so as to be apart from the base 30.

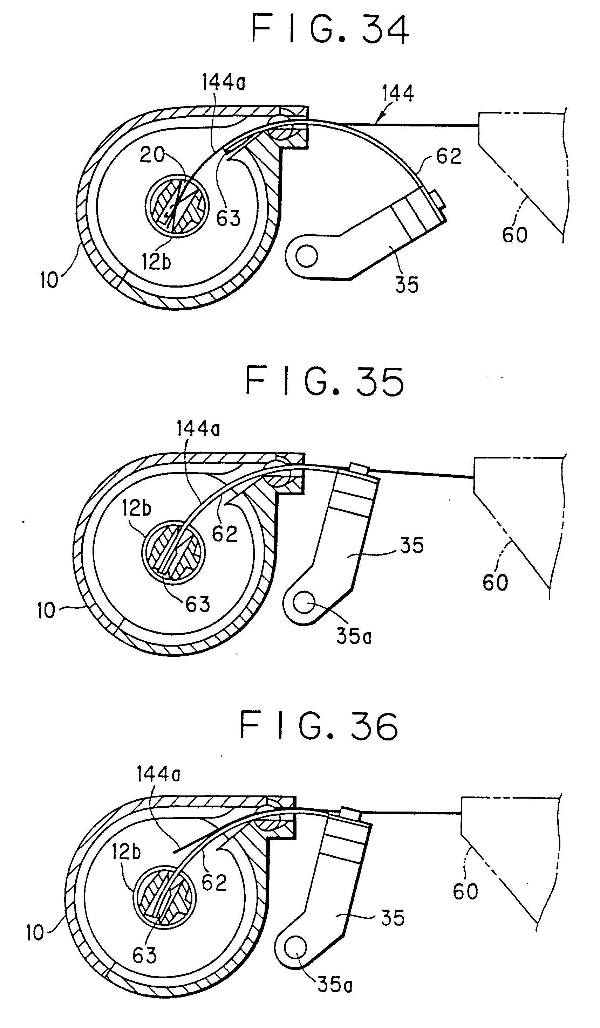

The arm 35 is rotated as illustrated in Fig. 34. The front edge 62a of the separator jig 62 is entered into the passage port 19 in the cassette shell 10, along the emulsion surface of the photographic film 144, arranged on the bottom side as viewed in the drawings. While tension is applied to the photographic film 144, the slot 20 in the spool 12 is directed to the passage port 19. The front edge 62a of the separator jig 62 enters the slot 20 deeply, as illustrated in Fig. 35. Note that photoelectric detection of the notch 13a on the photo sensor 42 may be use in auxiliary fashion, for the purpose of checking the rotational orientation of the slot as to whether directed to the passage port 19.

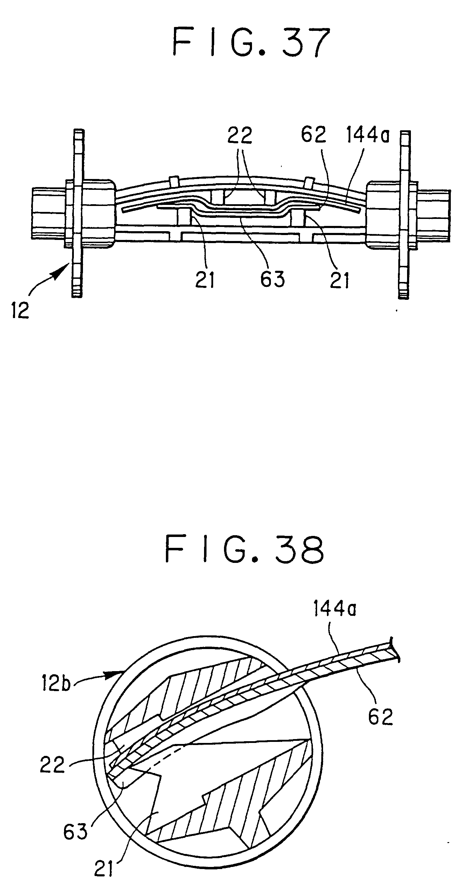

Figs. 37 and 38 illustrate the front end of the separator jig 62 as thrust deeply into the slot 20. The preventive ridges 22 on the upside of the slot 20 abut on the lowered portion 63 of the separator jig 62. Lateral raised portions 62b press the upside of the slot 20 upward, to deform the core 12b curvedly, as illustrated in Fig. 37. The raised portions 62b, as thrust, ride the retaining claws 21, are inserted between the photographic film 144 and the retaining claws 21, and disengage the retaining holes 25 from the claws 21, until the trailer 144a is released from retention on the spool 12. Note that to enter the separator jig 62 into the cassette shell 10 is also reliable in the course where the photographic film 144 stands unwound so that only one convolution or less remains wound on the spool 12. This is because, though the separator jig 62 is not directed to the slot 20 initially, the emulsion surface of the photographic film 144 is in contact with the separator jig 62, and guides it to the entrance of the slot 20 while the one convolution or less is being unwound. The emulsion surface of the photographic film 144 could be scratched by the separator jig 62. However such scratches does not influence the image quality, because the separator jig 62 comes in contact only with the trailer 144a where no images are recorded.

The arm 35 is temporarily stopped from rotation. The drawing mechanism in the drawing device 60 is actuated to draw the photographic film 144. The trailer having been released from retention on the spool 12, the photographic film 144 as drawn is removed from the spool 12 as illustrated in Fig. 36, until the photographic film 144 is fully drawn into the drawing device 60. The arm 35 is rotated in reverse, and returned to the home position indicated by the solid line in Fig. 29. The drawing device 60 again comes close to the base 30, and stands by for processing of another cassette containing exposed photographic film.

The use of the novel photographic film removing apparatus thus makes it possible with ease to remove the trailer from the spool 12, without any disassembly of the cassette shell 10. If the inserting apparatus in Fig. 5 to 7 is used additionally to the removing apparatus, it is conceivable with advantages to reuse the used cassette shell as emptied by the removing apparatus. Novel separator jigs can be alternatively formed in the shapes as illustrated in Figs. 31, 32 and 33. In Fig. 31, a separator jig 66 has a flat front edge. When thrust into the slot 20, the widthwise central portion is bent and lowered by the preventive ridges 22 for smooth entry into the slot 20, while assisted by an opening 66. The opening 66 is also helpful, when a passage port is constructed with a plush or light-trapping fabric, to incline the pile threads of the plush toward the outside of the cassette.

In Fig. 32, a separator jig 67 is provided with a central recess defining a pair of lateral projections 67a, which are adapted to contact with the claws 21 and disengagement of the holes 25. In Fig. 33, a separator jig 68 is provided with two grooves 68a beside which a pair of flaps 68b are defined. The central portion is easily deformable in contact with the preventive ridges 22. All the separator jigs 66 to 68 can be also attached to the arms 35 in Fig. 29. With any of the variant separator jigs, the path for movement can be determined appropriately in view of unfailing entry of the jigs into the slot formed in the spool. The cassette to be processed with the novel removing apparatus can be such as illustrated in Fig. 23 to 27 with more preference, because the retaining claws can be deformed with greater ease.

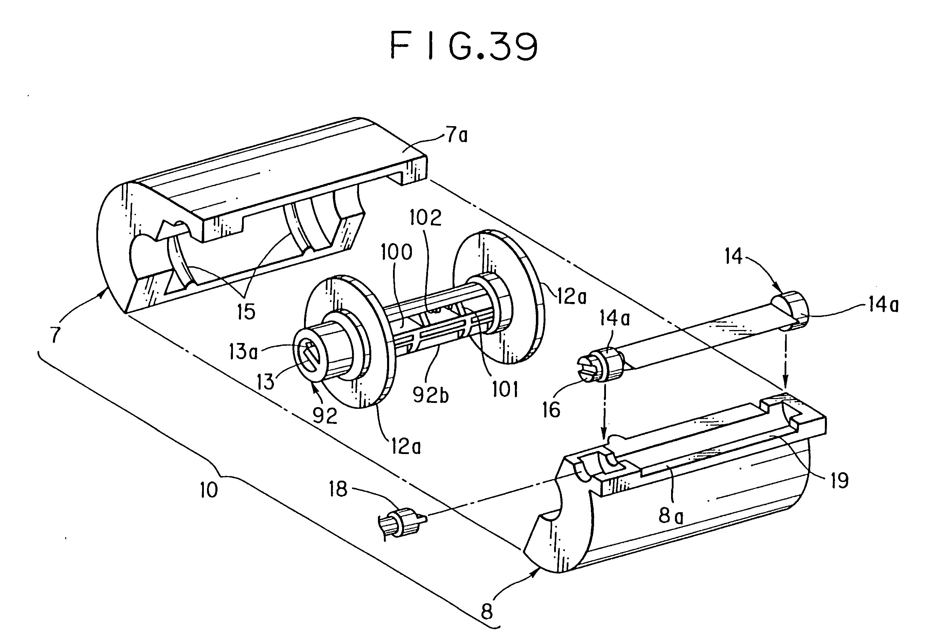

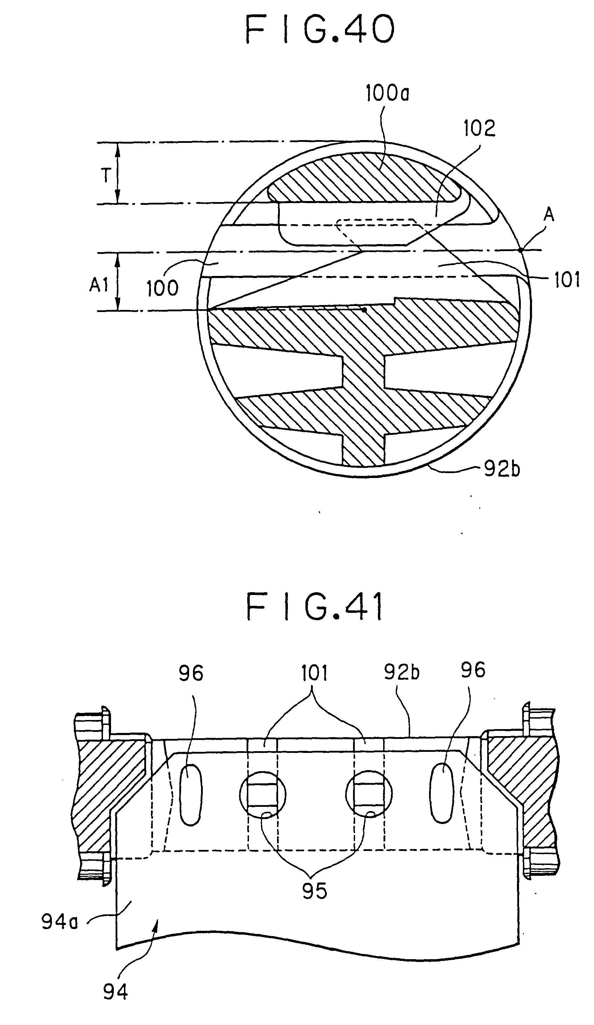

There is problems in the above embodiments in that operation of entering the inserter jig or separator jig into the slot in the spool requires excessive force, which would irrecoverably deform the jigs. The radius of curvature of the inserter jig or separator jig should be determined so small that a passage of the jigs through the passage port would cause the jig to rub the inside of the passage port to scratch or wear it. With the cassette shell having the plush, the threads would be so erected as to hinder the photographic film from passing through the passage port. Figs. 39 to 42 illustrate an embodiment not according to the present invention in which a radius of curvature of an inserter jig is enlarged, in order to reduce resistance in entry of the jig into the slot and to keep spatial allowance for passage through the passage port. Elements the same as those of the former apparatus is designated with identical reference numerals.

The cassette shell 10 contains a novel spool 92 not covered by the present invention, appropriate for winding photographic film 94 of a somewhat long strip, namely for recording somewhat many picture frames, e.g. as many as 36 to 40 exposures. The diameter across a core 92b of the spool 92 is in the range of 5 to 10 mm, namely so small as to correspond to the somewhat many convolutions of the photographic film 94 as wound.

A slot 100 is so formed in the core 92b that a center line of the slot 100, namely the line equally distant from two walls of the slot 100, is not passed through the rotational axis of the spool 92. Let Al be an interval between the center line of the slot 100 and the axis of the spool 92. Al is for example in the range of 0.3 to 4 mm. Let T be the thickness of a thinner wall 100a of the slot 92 which is thinner than the opposite wall and is provided with slip-preventive ridges 102. To facilitate the deformation of the thinner wall 100a, T is in the range of 0.3 to 1.5 mm, more preferably 0.8 to 1.2 mm.

It is also noted that intersection between retaining claws 101 and the preventive ridges 102 lies not on the rotational axis of the spool 92. A novel apparatus for loading photographic film into the cassette having the spool 92 is provided with an inserter jig 109, of which an arcuate shape has a somewhat great radius of curvature, for example in the range of 18 to 30 mm.

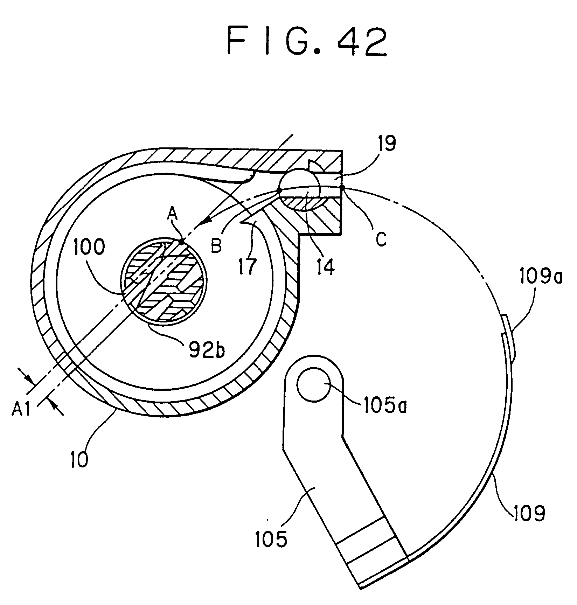

Fig. 42 illustrates a relationship between the cassette shell 10 and a jig arm 105 while the cassette shell 10 stands positioned by the holder 31 and the edge 33 in the predetermined orientation. Point A is the intersection of the center line of the slot 100 and the core 92b. Point B lies in the innermost position of the passage port 19 and equally distant from the port walls of the passage port 19. Point C lines in the outermost position of the passage port 19 and equally distant to the port walls. The arcuate shape of the inserter jig 109 and thus the path of each pick-up claw 109a lie on a circle on which Points A, B and C lie. The inserter jig 109 with the pick-up claws 109a passes substantially a course equally distant from the port walls of the passage port 19.

Because the thinner wall 100a of the slot 100 in the core 92b desirably is only as thick as 0.8 to 1.2 mm, the thinner wall 100a is so easily deformed that resistance to entry of the inserter jig 109 is in the range of only 300 to 700 gf. This is substantially low resistance as compared with the former spools, in which the slot passes the rotational axis, with a high resistance to entry of the inserter jig ranging from 800 to 1000 gf. The core 92b makes no influence deforming irrecoverably the pick-up claws 109a.

Note that, to load the cassette shell 10 with the photographic film 94, the spool 12 is stopped for standing by for receiving a trailer 94a into the slot 100 as illustrated in Fig. 42, namely in the orientation where Point A is in the arcuate path of the claws 109a. In rotating the arm 105, the claws 109a pick up pick-up holes 96 in the trailer 94a and pass Points B and C within the passage port 19 so as to enter the cassette shell 10. The thinner wall 100a with the preventive ridges 102 is omitted from Fig. 41, for convenience in showing the trailer 94a with the core 92b.

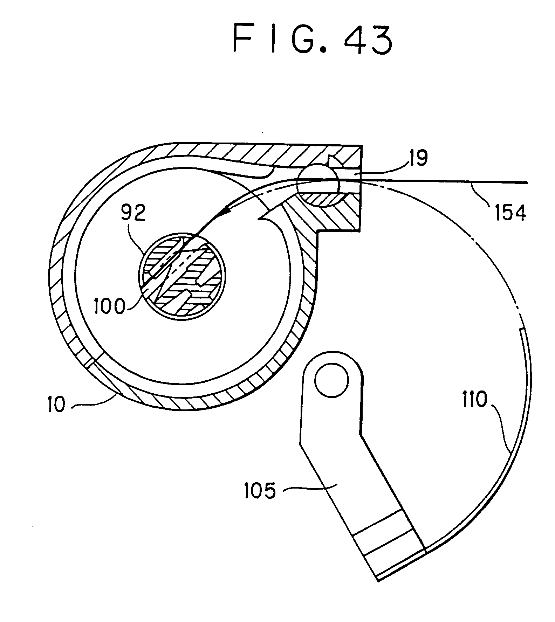

Fig. 43 explanatorily illustrates a photographic film removing apparatus appropriate for the cassette shell 10 containing the novel spool 92. Elements the same as those of the former apparatus is designated with identical reference numerals. A separator jig 110 is entered between the retaining claws 101 and exposed photographic film 154. The retaining holes 95 are disengaged from the retaining claws, so as to release the trailer 154 from retention on the slot 100.

Note that, when the present invention is applied to a cassette as disclosed in U.S.P. 4,834,306 in which a spool has a pair of flanges with circumferential lips, it is desirable to prevent the jigs from coming in contact with the flanges, by setting the width of the inserter jig 109 and the separator jig 110 smaller than the interval defined between the two lips on the flanges.

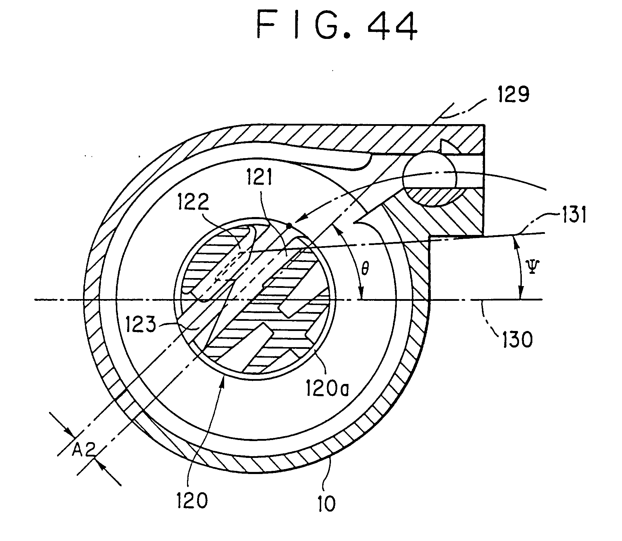

Fig. 44 illustrates a cassette containing another novel spool 92 not according to the present invention, appropriate for winding photographic film of a shorter strip, namely for recording fewer picture frames, e.g. as many as 10 to 28 exposures, unlike the former photographic film 94, 154 of recording somewhat many picture frames. The diameter across a core 120b of the spool 120 is in the range of 11 to 13 mm, greater than that of the former embodiment, namely so great as to correspond to the fewer convolutions of the photographic film as wound.

Let A2 be an interval between the center line of a slot 123 and the axis of the spool 120. It is desirable that A2 be equal to or below Al as described with the above embodiment. Let ( be an angle between a horizontal line 130 and a line 129, namely an angle between the course of the passage port 19 and the direction of the slot 123 as oriented for receiving the trailer. It is desirable that B be equal to or over a counterpart associated with the spool 92. Let ( be an angle between the horizontal line 130 and a line 131 along which retaining claws 121 are inclined for coming in gentle contact with the trailer as inserted. It is desirable that ψ be substantially equal to a counterpart associated with the former spool 92. Referenced by 122 are slip-preventive ridges.

Therefore the present invention is applicable with advantages to loading the photographic film of a shorter strip into the cassette provided with the spool suitable for the fewer convolutions, in the manner the same as loading the photographic film of a longer strip into the cassette provided with the spool suitable for the more convolutions.

## Claims

1. A cassette with a photographic film (24,94,124,134), said cassette including:
a spool (50) provided with a retaining structure (48b) for retaining a trailer (134a) of said photographic film;
a cassette shell (10) provided with a spool chamber for containing said spool (50) rotatably and a photographic film passage port for communicating said spool chamber to an outside;
wherein the core (48) of said spool (50) is provided with a recess extending in longitudinal direction,
said retaining structure is an inserting claw (48b) formed on said recess in said spool core (48), and said claw (48b) engages at least one hole (54) of said trailer (134a),
**characterized by**
a clamper member (49) fittable into said recess in said spool core (48) in order to clamp said trailer (134a) with said spool core (48),
wherein said clamper member (49) is connected via a foldable connecting hinge portion (47) to said spool core for connecting said clamper member (49) to said spool core (48) foldably.

2. A cassette as defined in claim 1, wherein said clamper member (49) and said recess for receiving said clamper member (49) are substantially crescent as viewed in cross-section.

3. A cassette as defined in claim 1 or 2, wherein said cassette further includes:
at least one preventive hole (49b) formed in said clamper member (49) for receiving said inserting claw (48b) of said spool core (48) in order to prevent said hole (54) in said trailer (134a) from slipping away from said inserting claw (48b);
at least one retaining claw (49a) formed on said clamper member (49); and
at least one retaining hole (48a) formed on said recess of said spool core (48) for retaining said retaining claw (49a) of said clamper member (49) in order to join said clamper member (49) to said spool core (48).

## Patentansprüche

1. Patrone mit einem Photofilm (24, 94, 124, 134), wobei die Patrone enthält:
eine Spule (50), versehen mit einer Haltestruktur (48b) zum Halten eines Filmanfangs (134a) des Photofilmes;
einem Patronengehäuse (10), versehen mit einer Spulenkammer, um die Spule (50) drehbar zu enthalten und eine Photofilmdurchgangsöffnung zum Verbinden der Spulenkammer mit einer Umgebung;
wobei der Kern (48) der Spule (50) mit einer Ausnehmung versehen ist, die sich in Längsrichtung erstreckt,
die Haltestruktur eine Einführklaue (48b) ist, gebildet an der Ausnehmung des Spulenkerns (48), und
wobei die Klaue (48b) mit zumindest einem Loch (54) des Filmanfangs im Eingriff ist,
**dadurch gekennzeichnet, daß**
ein Klemmteil (49) in die Ausnehmung in dem Spulenkem (48) einsetzbar ist, um den Filmanfang (134a) mit dem Spulenkem (48) zu klemmen, wobei das Klemmteil (49) über einen faltbaren Verbindungsgelenkabschnitt (47) mit dem Spulenkern (48) zum Verbinden des Klemmteiles (49) mit dem Spulenkern (48) faltbar verbunden ist.

2. Patrone nach Anspruch 1, wobei das Klemmteil (49) und die Ausnehmung zum Aufnehmen des Klemmteiles (49) im wesentlichen sichelförmig sind, wenn im Querschnitt gesehen wird.

3. Patrone nach Anspruch 1 oder 2, wobei die Patrone außerdem enthält:
zumindest ein Verhinderungsloch (49b), gebildet in dem Klemmteil zum Aufnehmen der Einsetzklaue (48b) des Spulenkerns (48), um zu verhindern, daß das Loch (54) in dem Filmanfang (134a) von der Einsetzklaue (48b) wegrutscht;
zumindest eine Halteklaue (49a), gebildet an dem Klemmteil (49); und
zumindest eine Halteloch (48a), gebildet an der Ausnehmung des Spulenkerns (48) zum Halten der Halteklaue (49a) des Klemmteils (49), um das Klemmteil (49) mit dem Spulenkern (48) zu verbinden.

## Revendications

1. Cassette avec un film photographique (24, 94, 124, 134), ladite cassette comprenant une bobine (50) pourvue d'une structure de retenue (48b) pour retenir une queue (134a) dudit film photographique, et une coque de cassette (10) pourvue d'une chambre à bobine pour contenir ladite bobine (50) en rotation, et d'un orifice de passage pour film photographique (19) pour faire communiquer ladite chambre à bobine vers l'extérieur ;
dans laquelle le noyau (48) de ladite bobine (50) est pourvu d'un évidement s'étendant en direction longitudinale, ladite structure de retenue est une griffe d'introduction (48b) formée sur ledit évidement dans ledit noyau de bobine (48), et ladite griffe (48b) engage au moins un trou (54) de ladite queue (134a) ;
**caractérisée par** :
un élément formant pince (49) susceptible d'être logé dans ledit évidement dans ledit noyau de bobine (48) afin de pincer ladite queue (134a) avec ledit noyau de bobine (48), et dans laquelle ledit élément formant pince (49) est connecté via une partie de charnière de connexion repliable (47) audit noyau de bobine afin de connecter ledit élément formant pince (49) audit noyau de bobine (48) de manière repliable.

2. Cassette selon la revendication 1, dans laquelle ledit élément formant pince (49) et ledit évidement pour recevoir ledit élément formant pince (49) sont sensiblement en forme de croissant, vus en section transversale.

3. Cassette selon l'une ou l'autre des revendications 1 et 2, dans laquelle ladite cassette inclut encore :
- au moins un trou de prévention (49b) formé dans ledit élément formant pince (49) pour recevoir ladite griffe d'introduction (48b) dudit noyau de bobine (48) afin d'empêcher audit trou (54) dans ladite queue (134a) de glisser en éloignement de ladite griffe d'introduction (48b);
- au moins une griffe de retenue (49a) formée sur ledit élément formant pince (49) ; et
- au moins trou de retenue (48a) formé sur ledit évidement dudit noyau de bobine (48) pour retenir ladite griffe de retenue (49a) dudit élément formant pince (49) afin de réunir ledit élément formant pince (49) sur ledit noyau de bobine (48).
